# FASCICULE DE BREVET EUROPEEN

(11) **EP 2 396 525 B1**
(45) Date de publication et mention de la délivrance du brevet: **03.04.2019**
(21) Numéro de dépôt: 10703858.0
(22) Date de dépôt: 11.02.2010
(51) Int. Cl.: F01D 1/24, F04D 19/02, F02C 3/067, F02K 3/072, F02C 7/36

(54) **SYSTÈME D'HÉLICES CONTRAROTATIVES À ENCOMBREMENT RÉDUIT**
SYSTEM VON KOMPAKTEN GEGENLÄUFIGEN PROPELLERN
SYSTEM OF COMPACT CONTRA-ROTATING PROPELLERS

(30) Priorité: 13.02.2009 FR 0950907
(43) Date de publication de la demande: 21.12.2011
(73) Titulaire: Safran Aircraft Engines, 75015 Paris (FR)
(72) Inventeur: CHARIER, Gilles, Alain, F-77130 La Grande Paroisse (FR); GALLET, François, F-75012 Paris (FR)
(74) Mandataire: Ilgart, Jean-Christophe
(86) Numéro de dépôt international: PCT/EP2010/051675
(87) Numéro de publication internationale: WO 2010/092094

(56) Documents cités:
- EP-A1- 0 420 746
- DE-B3-102005 059 438
- FR-A1- 2 660 362
- US-A- 4 817 382
- US-A- 4 951 461
- US-B1- 6 209 311

## Description

### DOMAINE TECHNIQUE

La présente invention se rapporte de façon générale à un système d'hélices contrarotatives, pour turbomachine d'aéronef.

L'invention concerne également une turbomachine pour aéronef comprenant un tel système d'hélices contrarotatives.

L'invention s'applique de préférence aux turbomachines pour aéronef, par exemple du type turboréacteur ou turbopropulseur. Elle s'applique plus particulièrement aux turbomachines dites à « open rotor », au sein desquelles une turbine libre de puissance entraîne les deux hélices contrarotatives, directement ou indirectement par l'intermédiaire d'un dispositif de transmission mécanique formant réducteur et comprenant notamment un train épicycloïdal. Dans ces systèmes d'hélices contrarotatives, les hélices sont donc dépourvues de carénage au niveau de leurs extrémités radiales externes.

### ETAT DE LA TECHNIQUE ANTERIEURE

De l'art antérieur, il est effectivement connu des turbomachines à systèmes d'hélices contrarotatives, dont les hélices sont entraînées par un dispositif de transmission mécanique, prenant habituellement la forme d'un réducteur différentiel. Ce réducteur différentiel comporte un train épicycloïdal particulier, dont le planétaire est entraîné en rotation par un rotor d'une turbine libre de puissance, dont le porte-satellites entraîne la première hélice, et dont la couronne entraîne la seconde hélice. A cet égard, il est noté qu'en fonction de la position des hélices contrarotatives par rapport à la turbine libre de puissance qui les entraîne, la première hélice constitue l'hélice aval et la seconde hélice, l'hélice amont, ou inversement. Quoi qu'il en soit, à la différence d'un train épicycloïdal simple, la couronne n'est pas fixe, mais mobile.

Habituellement, chacune des première et seconde hélices comprend un moyeu centré sur l'axe longitudinal, une virole extérieure lui étant disposée concentriquement et participant à la délimitation radiale vers l'extérieur d'une veine annulaire principale de la turbomachine, ainsi que des bras de raccord reliant la virole extérieure au moyeu.

De plus, il est prévu un carter interposé entre la turbine libre de puissance et les première et seconde hélices. Ce carter présente une extension de carter en direction de l'hélice la plus proche, cette extension supportant en rotation le moyeu de cette hélice.

Cette configuration implique qu'une partie importante de l'hélice susmentionnée, voire l'intégralité de celle-ci, se trouve déportée axialement de l'extension de carter assurant son support en rotation. Il en résulte un porte-à-faux délicat à gérer d'un point de vue mécanique, et nécessitant généralement un allongement important de l'extension de carter, en particulier dans le but d'écarter les paliers de roulement afin de procurer un guidage en rotation acceptable.

Cette contrainte se traduit par un allongement du système d'hélices dans la direction axiale, à la fois coûteux en termes de masse globale et d'encombrement.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un système d'hélices contrarotatives pour turbomachine d'aéronef, comprenant :
- une turbine libre de puissance ;
- une première hélice et une seconde hélice contrarotatives destinées à être mises en rotation autour d'un axe longitudinal du système d'hélices, ladite première hélice étant située dans une direction donnée par rapport à ladite seconde hélice, chacune des première et seconde hélices comprenant un moyeu centré sur l'axe longitudinal, une virole extérieure lui étant disposée concentriquement et participant à la délimitation radiale vers l'extérieur d'une veine annulaire principale, ainsi que des bras de raccord reliant ladite virole extérieure audit moyeu ;
- un dispositif de transmission mécanique entraîné par ladite turbine libre de puissance et entraînant lesdites première et seconde hélices ; et
- un carter interposé entre ladite turbine libre de puissance et lesdites première et seconde hélices, ces dernières étant agencées dans ladite direction donnée par rapport au carter et la turbine libre étant agencée dans la direction opposée par rapport à ce même carter, celui-ci présentant une extension de carter dans ladite direction donnée, supportant en rotation ledit moyeu de ladite seconde hélice.

Selon l'invention, lesdits bras de raccord de la seconde hélice s'étendent dans ladite direction opposée en allant radialement vers l'extérieur.

L'invention prévoit donc astucieusement d'incliner les bras de raccord de la seconde hélice afin qu'ils se rapprochent du carter en allant radialement vers l'extérieur, ce qui permet globalement de rapprocher les pales de ce même carter.

Une conséquence de ce rapprochement des pales en direction du carter réside dans la diminution de la longueur du système d'hélices, dans la direction axiale. Il en résulte un gain en termes de masse et d'encombrement.

Une autre conséquence de ce rapprochement réside dans la limitation de la partie de la seconde hélice en porte-à-faux vis-à-vis de l'extension de carter. En d'autres termes, l'inclinaison spécifique des bras de raccord permet de décaler le centre des masses de la seconde hélice vers le carter, réduisant ainsi le porte-à-faux par rapport aux réalisations rencontrées antérieurement. De ce fait, l'extension de carter servant à guider le moyeu de la seconde hélice peut être de dimension réduite dans la direction axiale, étant donné que l'écartement requis entre les paliers de roulement est aussi diminué par rapport aux solutions antérieures à porte-à-faux plus conséquent. Il en résulte un gain additionnel en termes de masse et d'encombrement.

L'invention est applicable à toutes les turbomachines, en particulier celles dites à « open rotor ». Dans ce dernier cas, l'invention s'applique que le système d'hélices soit disposé en amont ou en aval du générateur de gaz. Dans chacun de ces deux cas, au sein du système d'hélices, il peut être envisagé de placer la turbine de puissance en amont ou en aval des hélices contrarotatives. Cela est également applicable pour la position du train épicycloïdal vis-à-vis des hélices.

De préférence, ladite direction donnée est la direction aval. Ainsi, ladite première hélice est l'hélice aval, et ladite seconde hélice est l'hélice amont. Cette disposition spécifique est en particulier retenue lorsque le système d'hélices est disposé en aval du générateur de gaz de la turbomachine, à savoir lorsque celle-ci adopte une conception assurant une propulsion, dite conception « pusher ». Naturellement, une conception inverse pourrait être envisagée, dans laquelle ladite direction donnée serait la direction amont, sans sortir du cadre de l'invention. Ladite première hélice serait alors l'hélice amont, et ladite seconde hélice serait l'hélice aval. Cette autre solution est en particulier retenue lorsque le système d'hélices est disposé en amont du générateur de gaz de la turbomachine, à savoir lorsque celle-ci adopte une conception assurant une traction, dite conception « puller ».

Quelle que soit la conception envisagée parmi celles évoquées ci-dessus, il est de préférence fait en sorte qu'au moins une portion de chaque bras de raccord appartenant à la seconde hélice se situe dans ladite direction opposée par rapport à un palier de roulement interposé entre ladite extension de carter et ledit moyeu de la seconde hélice.

De manière analogue, il est de préférence fait en sorte que ladite seconde hélice comprend une pluralité de pales chacune montée de manière à être pilotée en incidence autour d'un axe de pivotement, et que cet axe de pivotement se situe dans ladite direction opposée par rapport à un palier de roulement interposé entre ladite extension de carter et ledit moyeu de la seconde hélice.

Les deux configurations décrites ci-dessus, rendues possibles grâce à l'inclinaison spécifique des bras de la seconde hélice, illustrent bien la faculté offerte par la présente invention de recentrer les masses de cette seconde hélice vers le carter qui la sépare de la turbine libre de puissance.

De préférence, le moyeu de ladite seconde hélice supporte en rotation ledit moyeu de ladite première hélice.

De préférence, lesdits bras de raccord de la première hélice s'étendent dans ladite direction donnée en allant radialement vers l'extérieur, même si toute autre configuration pourrait être retenue, sans sortir du cadre de l'invention.

De préférence, lesdits bras de raccord de la première hélice portent une première virole intermédiaire participant à la délimitation radiale vers l'intérieur de la veine annulaire principale, et lesdits bras de raccord de la seconde hélice portent une seconde virole intermédiaire participant à la délimitation radiale vers l'intérieur de la veine annulaire principale, la première virole intermédiaire se situant dans la continuité de ladite seconde virole dans ladite direction donnée.

De préférence, les bras de raccord de la première hélice et ses viroles extérieure et intermédiaire associées forment une pièce réalisée d'un seul tenant, et les bras de raccord de la seconde hélice et ses viroles extérieure et intermédiaire associées forment également une pièce réalisée d'un seul tenant. Alternativement, chacun de ces deux ensembles monoblocs pourrait être réalisé par plusieurs pièces rapportées les unes aux autres.

Comme mentionné ci-dessus, ladite direction donnée est préférentiellement la direction aval.

De préférence, ledit dispositif de transmission mécanique comprend un train épicycloïdal muni d'un planétaire centré sur ledit axe longitudinal et entraîné par le rotor de la turbine libre de puissance, au moins un satellite engrenant avec ledit planétaire, un porte-satellite(s) entraînant ladite première hélice, ainsi qu'une couronne engrenant avec chaque satellite et entraînant ladite seconde hélice.

De préférence, ledit porte-satellite(s) est solidaire du moyeu de ladite première hélice, et ladite couronne est solidaire du moyeu de ladite seconde hélice.

De préférence, chaque virole extérieure porte un anneau de rétention des pales de l'hélice concernée.

De préférence, les première et seconde hélices disposent chacune d'un système de calage variable de leurs pales. De façon connue, ces systèmes sont pilotés de manière à ce que la vitesse de rotation des deux hélices soit maintenue sensiblement constante en fonctionnement, quel que soit le régime moteur.

L'invention a par ailleurs pour objet une turbomachine pour aéronef comprenant un système d'hélices contrarotatives tel que décrit ci-dessus, cette turbomachine étant par exemple un turbopropulseur, mais pouvant alternativement être un turboréacteur à soufflante contrarotative. Naturellement, dans ce dernier cas, le dispositif de transmission mécanique précité est destiné à mouvoir la soufflante contrarotative du turboréacteur. De préférence, comme mentionné ci-dessus, l'invention s'applique plus particulièrement aux turbomachines dites à « open rotor », au sein desquelles la turbine libre de puissance entraîne les deux hélices contrarotatives, indirectement par l'intermédiaire d'un dispositif de transmission mécanique formant réducteur et comprenant notamment un train épicycloïdal.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en demi-coupe longitudinale d'une turbomachine pour aéronef, selon un mode de réalisation préféré de la présente invention ;
- la figure 2 représente une vue en coupe prise le long de la ligne II-II de la figure 1 ;
- les figures 3a et 3b représentent des vues partielles en perspective, selon différents angles, du système d'hélices contrarotatives équipant la turbomachine montrée sur la figure 1 ; et
- la figure 4 représente une vue agrandie en coupe d'une partie du système d'hélices contrarotatives montré sur les figures précédentes.

### EXPOSÉ DÉTAILLÉ DE MODES DE RÉALISATION PRÉFÉRÉS

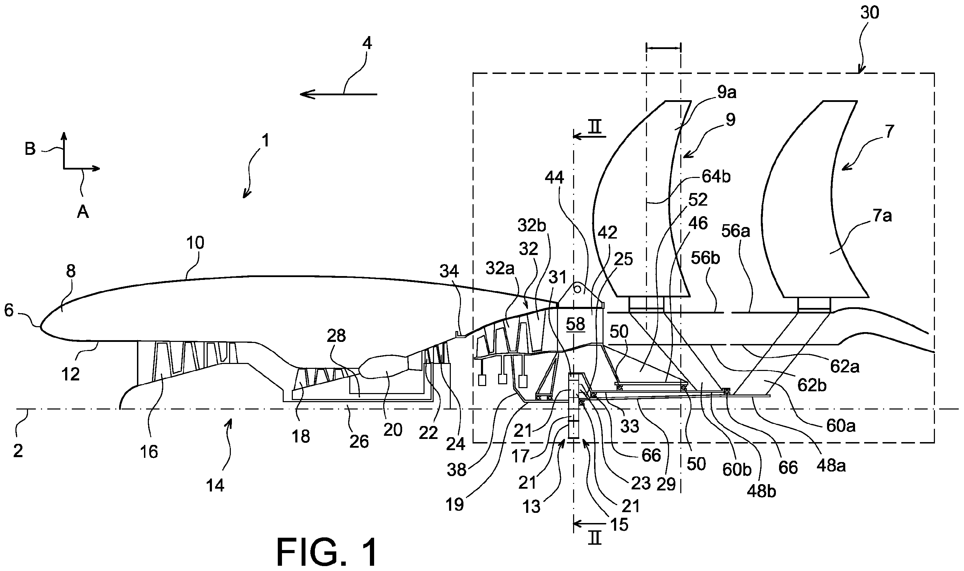

En référence à la figure 1, on peut apercevoir une turbomachine 1 du type à « open rotor », selon un mode de réalisation préféré de la présente invention.

Sur les figures, la direction A correspond à la direction longitudinale ou direction axiale, parallèle à l'axe longitudinal 2 de la turbomachine. La direction B correspond quant à elle à la direction radiale de la turbomachine. De plus, la flèche 4 schématise la direction d'avancement de l'aéronef sous l'action de la poussée de la turbomachine 1, cette direction d'avancement étant contraire au sens principal d'écoulement des gaz au sein de la turbomachine. Les termes « avant », « amont », « arrière », « aval » utilisés dans la suite de la description sont à considérer par rapport à ladite direction d'avancement 4.

En partie avant, la turbomachine présente une entrée d'air 6 se poursuivant vers l'arrière par une nacelle 8, celle-ci comportant globalement une peau extérieure 10 et une peau intérieure 12, toutes les deux centrées sur l'axe 2 et décalées radialement l'une de l'autre.

La peau intérieure 12 forme carter radial externe pour un générateur de gaz 14, comprenant de façon classique, de l'avant vers l'arrière, un compresseur basse pression 16, un compresseur haute pression 18, une chambre de combustion 20, une turbine haute pression 22, et une turbine de pression intermédiaire 24. Le compresseur 16 et la turbine 24 sont reliées mécaniquement par un arbre 26, formant ainsi un corps de faible pression, tandis que le compresseur 18 et la turbine 22 sont reliées mécaniquement par un arbre 28, formant un corps de pression plus élevée. Par conséquent, le générateur de gaz 14 présente de préférence une conception classique, dite à double corps.

En aval de la turbine de pression intermédiaire 24, se trouve un système d'hélices contrarotatives 30, formant récepteur de la turbomachine.

Ce système 30 comprend une turbine libre de puissance 32, formant turbine basse pression. Elle comporte un rotor 32a constituant la partie interne de la turbine, ainsi qu'un stator 32b constituant la partie externe de cette turbine, qui est reliée fixement à un ensemble de carter fixe 34 de ce système d'hélices, centré sur l'axe longitudinal 2 du système. Ce stator 34 est de façon connue destiné à être solidaire des autres carters de la turbomachine. A cet égard, il est indiqué que le système d'hélices 30 est de préférence conçu de sorte que les hélices soient dépourvues de carénage radial extérieur les entourant, comme visible sur les figures.

De plus, en aval de la turbine contrarotative 32, le système d'hélices 30 intègre une première hélice 7 ou hélice aval, portant des pales 7a. De manière analogue, le système 30 comprend une seconde hélice 9 ou hélice amont, portant des pales 9a. Ainsi, les hélices 7, 9 sont décalées l'une de l'autre selon la direction 4, et toutes les deux situées en aval de la turbine libre 32.

Les deux hélices 7, 9 sont destinées à tourner dans des sens opposés autour de l'axe 2 sur lequel elles sont centrées, les rotations s'effectuant par rapport au stator 34 restant immobile.

Pour l'entraînement en rotation de ces deux hélices 7, 9, il est prévu un dispositif de transmission mécanique 13, formant réducteur et comprenant notamment un train épicycloïdal 15.

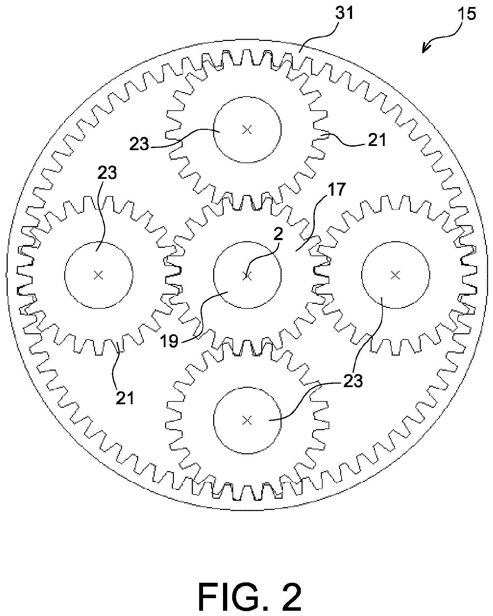

En référence aux figures 1 et 2, le train 15 est muni d'un planétaire 17 centré sur l'axe longitudinal 2, et porté par un arbre planétaire 19 de même axe, relié solidairement vers l'amont au rotor 32a, par le biais d'une bride 38. Ainsi, le rotor 32a entraîne directement le planétaire 17 en rotation, ce dernier prenant la forme d'une roue dentée extérieurement.

Le train 15 comporte également un satellite 21, et de préférence plusieurs comme cela est visible sur la figure 2, chacun d'eux engrenant avec le planétaire 17. Chaque satellite 21 est porté par un arbre satellite 23 d'axe excentré par rapport à l'axe 2, et prend la forme d'une roue dentée extérieurement.

En outre, le train 15 est équipé d'un porte-satellites 25 centré sur l'axe longitudinal 2, et portant de manière rotative chacun des satellites 21, par l'intermédiaire des arbres 23, respectivement. Le porte-satellites 25 est porté par un arbre de porte-satellites 29 de même axe, solidaire de la première hélice 7, comme cela est visible sur la figure 1, de manière à pouvoir l'entraîner directement en rotation.

Enfin, le train 15 dispose d'une couronne 31 centrée sur l'axe 2 et portée par un arbre de couronne 33 de même axe, cette couronne 31 engrenant avec chaque satellite 21. L'arbre 33 s'étend vers l'aval en étant solidaire de la seconde hélice 9, de manière à pouvoir l'entraîner directement en rotation. Par exemple, cet arbre 33 se trouve situé autour de l'arbre de porte-satellites 29 avec lequel il est concentrique. La couronne 31 prend quant à elle la forme d'une roue dentée intérieurement.

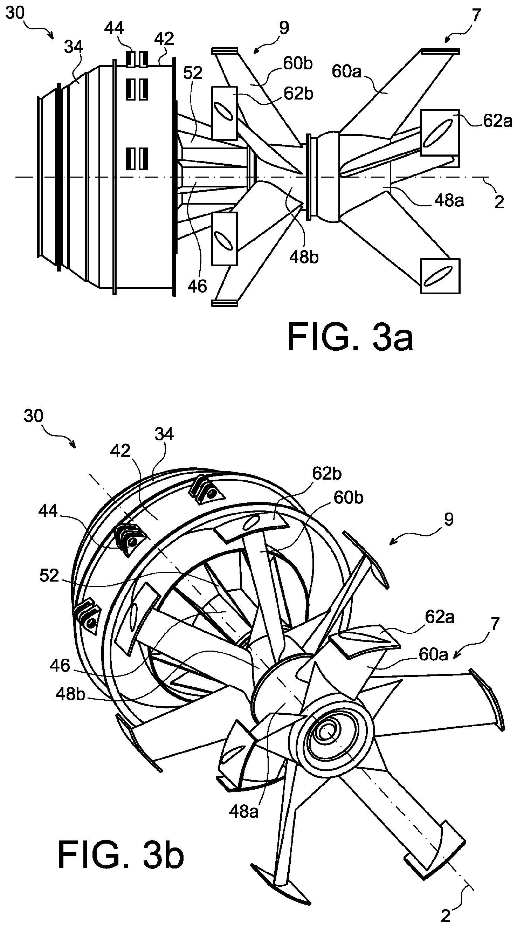

Dans le mode de réalisation préféré décrit, dans lequel chaque hélice est équipée d'un système de calage variable de ses pales, le train épicycloïdal 15 se situe au droit et à l'intérieur d'un carter 42 interposé entre la turbine libre de puissance 32 et les hélices 7, 9. Ce carter 42, également dénommé carter d'échappement ou encore « static frame », porte une attache moteur 44 destinée à assurer l'accrochage de la turbomachine sur la structure de l'aéronef, comme cela est notamment visible sur les figures 2, 3a et 3b. D'une façon générale, il est indiqué que le dispositif de transmission mécanique est logé dans le moyeu du carter 42.

Le carter 42, à l'aval duquel se situent les hélices et l'amont duquel se situe la turbine de puissance 32, comprend une extension de carter 46 s'étendant dans la direction aval par rapport à une portion centrale de ce carter. Cette extension 46 prend la forme d'un cylindre creux centré sur l'axe 2, supportant en rotation un moyeu 48b de la seconde hélice, ce moyeu 48b se confondant avec l'arbre de couronne 33, comme cela est visible sur la figure 1. Ce support en rotation s'effectue par l'intermédiaire de deux paliers à roulement 50 espacés l'un de l'autre selon la direction A, et interposés entre l'extension 46 et le moyeu 48b. Pour accroître la rigidité et le maintien mécanique de l'extension 46, celle-ci est reliée à la portion centrale du carter 42 par l'intermédiaire de nervures de renfort 52, réparties tout autour de cette extension et s'étendant chacune radialement.

La seconde hélice 9 comporte également une virole extérieure 56b disposée concentriquement au moyeu 48b, et participant à la délimitation radiale vers l'extérieur d'une veine annulaire principale 58.

De plus, elle comprend également une pluralité de bras de raccord 60b reliant la virole extérieure 56b au moyeu 48b. L'une des particularités de la présente invention consiste à prévoir que chaque bras 60b s'étend à partir d'une extrémité radiale interne, solidaire d'une portion du moyeu 48b en saillie vers l'aval de l'extension de carter 46, vers une extrémité radiale externe solidaire de la virole 56b, en allant vers l'amont. En coupe telle que celle montrée sur la figure 1, l'angle entre les bras 60b et la direction B peut être compris entre 20 et 50°.

En outre, les bras de raccord 60b de la seconde hélice portent une seconde virole intermédiaire 62b disposée entre le moyeu 48b et la virole extérieure 56b, cette virole 62b participant à la délimitation radiale vers l'intérieur de la veine annulaire principale 58. Naturellement, le moyeu 48b, les bras 60b agencés en étoile comme montré sur les figures 3a et 3b, et les viroles 62b, 56b forment un ensemble solidaire en rotation selon l'axe 2.

Dans le mode de réalisation préféré représenté, il est fait en sorte, pour limiter le porte-à-faux au niveau de l'extension de carter 46, qu'au moins une portion de chaque bras de raccord 60b se situe en amont du palier de roulement 50 le plus aval. Du fait de l'inclinaison spécifique des bras 60b, il s'agit de la portion radialement externe de ces bras. En outre, la figure 1 montre que chaque pale 9a est montée de manière à pouvoir être pilotée en incidence autour de son axe de pivotement 64b, par son système de calage variable (non représenté). Toujours pour limiter le porte-à-faux, il est fait en sorte que cet axe de pivotement 64b, et plus généralement le plan transversal intégrant l'ensemble des axes 64b des pales 9a, se situe en amont du palier de roulement 50 le plus aval.

L'arbre de couronne 33 prend la forme d'un cylindre creux centré sur l'axe 2, supportant en rotation un moyeu 48a de la première hélice, ce moyeu 48a se confondant avec l'arbre de porte-satellites 29, comme cela est visible sur la figure 1. Ce support en rotation s'effectue par l'intermédiaire de deux paliers à roulement 66 espacés l'un de l'autre selon la direction A, et interposés entre les deux moyeux 48b, 48a.

La première hélice 7 comporte également une virole extérieure 56a disposée concentriquement au moyeu 48a, et participant à la délimitation radiale vers l'extérieur de la veine annulaire principale 58. Elle se situe dans le prolongement aérodynamique aval de la virole extérieure 56b de la seconde hélice.

De plus, elle comprend également une pluralité de bras de raccord 60a reliant la virole extérieure 56a au moyeu 48a. Ici, chaque bras 60a s'étend à partir d'une extrémité radiale interne, solidaire d'une portion du moyeu 48a en saillie vers l'aval du moyeu creux 48b, vers une extrémité radiale externe solidaire de la virole 56a, en allant vers l'aval. En coupe telle que celle montrée sur la figure 1, l'angle entre les bras 60a et la direction B peut être compris entre 20 et 50°. Néanmoins, toute autre configuration peut être envisagée, les inclinaisons choisies pour les bras 60a, 60b dépendant en particulier de l'écartement désiré entre les pales 9a et 7a, selon la direction A, notamment pour répondre à des contraintes acoustiques. A titre d'exemple illustratif, les bras 60a pourraient être inclinés vers l'amont au même titre que les bras de raccord 60b.

Outre leur inclinaison dans la direction axiale, les bras de raccord peuvent également être calés par rapport au flux dans la direction tangentielle, afin de limiter la traînée induite par ceux-ci.

En outre, les bras de raccord 60a de la première hélice portent une première virole intermédiaire 62a disposée entre le moyeu 48a et la virole extérieure 56a, cette virole 62a participant à la délimitation radiale vers l'intérieur de la veine annulaire principale 58. Elle se situe dans le prolongement aérodynamique aval de la virole intermédiaire 62b de la seconde hélice. Naturellement, le moyeu 48a, les bras 60a agencés en étoile comme montré sur les figures 3a et 3b, et les viroles 62a, 56a forment un ensemble solidaire en rotation selon l'axe 2. A titre indicatif, il est noté que sur les figures 3a et 3b, pour des raisons de clarté, les viroles extérieures 56a, 56b ont été représentées interrompues, tandis que les viroles intermédiaires 62a, 62b ont volontairement été omises.

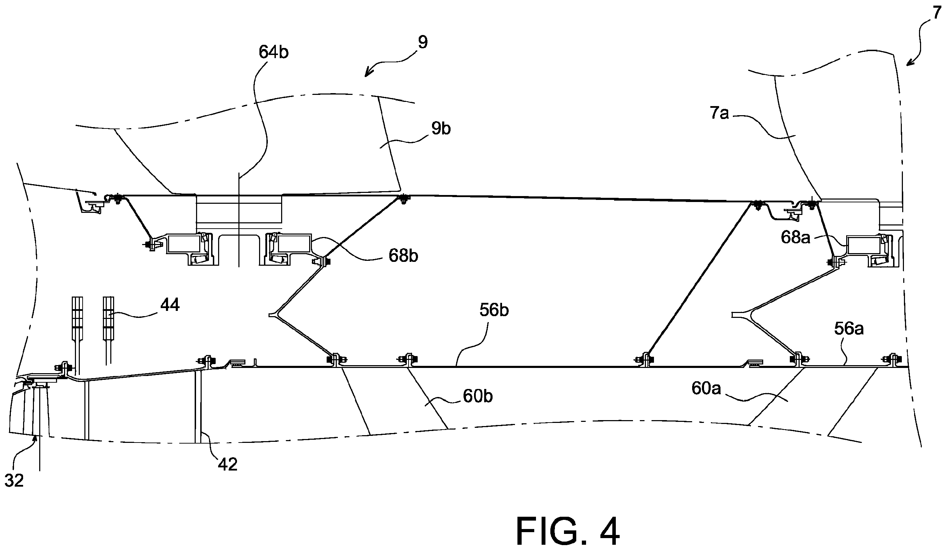

Sur la figure 4, on peut apercevoir que la virole extérieure 56b de la seconde hélice, qui s'étend entre le carter 42 et la virole 56a en une ou plusieurs parties rapportées les unes sur les autres, porte un anneau 68b de rétention des pales 9a. Cet anneau 68b, comportant une pluralité de trous chacun destiné à recevoir le pied d'une pale 9a, est globalement situé vers l'amont par rapport aux extrémités radiales externes des bras de raccord 60b. De manière analogue, la virole extérieure 56a de la première hélice, qui s'étend vers l'aval à partir de la virole 56b en une ou plusieurs parties rapportées les unes sur les autres, porte un anneau 68a de rétention des pales 7a. Cet anneau 68a, comportant une pluralité de trous chacun destiné à recevoir le pied d'une pale 7a, est globalement situé au droit des extrémités radiales externes des bras de raccord 60a.

Selon une forme particulière de réalisation, un premier ensemble monobloc est formé par les bras de raccord 60a et par la virole extérieure 56a et la virole intermédiaire 62a, de même qu'un autre ensemble monobloc est formé par les bras de raccord 60b et par la viroles extérieure 56b et la virole intermédiaire 62b.

Bien entendu, diverses modifications peuvent être apportées par l'homme du métier à l'invention qui vient d'être décrite, uniquement à titre d'exemples non limitatifs.

## Revendications

1. Système d'hélices contrarotatives (30) pour turbomachine d'aéronef, comprenant :
- une turbine libre de puissance (32) ;
- une première hélice (7) et une seconde hélice (9) contrarotatives destinées à être mises en rotation autour d'un axe longitudinal (2) du système d'hélices, ladite première hélice étant située dans une direction donnée par rapport à ladite seconde hélice, chacune des première et seconde hélices (7, 9) comprenant un moyeu (48a, 48b) centré sur l'axe longitudinal (2), une virole extérieure (56a, 56b) lui étant disposée concentriquement et participant à la délimitation radiale vers l'extérieur d'une veine annulaire principale (58), ainsi que des bras de raccord (60a, 60b) reliant ladite virole extérieure audit moyeu ;
- un dispositif de transmission mécanique (13) entraîné par ladite turbine libre de puissance et entraînant lesdites première et seconde hélices (7, 9) ; et
- un carter (42) interposé entre ladite turbine libre de puissance et lesdites première et seconde hélices (7, 9), ces dernières étant agencées dans ladite direction donnée par rapport au carter et la turbine libre étant agencée dans la direction opposée par rapport à ce même carter, celui-ci présentant une extension de carter (46) dans ladite direction donnée, supportant en rotation ledit moyeu (48b) de ladite seconde hélice (9),
**caractérisé en ce que** lesdits bras de raccord (60b) de la seconde hélice s'étendent dans ladite direction opposée en allant radialement vers l'extérieur.

2. Système d'hélices contrarotatives selon la revendication 1, **caractérisé en ce qu'**il est agencé de sorte qu'au moins une portion de chaque bras de raccord (60b) appartenant à la seconde hélice (9) se situe dans ladite direction opposée par rapport à un palier de roulement (50) interposé entre ladite extension de carter (46) et ledit moyeu de la seconde hélice.

3. Système d'hélices contrarotatives selon la revendication 1 ou la revendication 2, **caractérisé en ce que** ladite seconde hélice comprend une pluralité de pales (9a) chacune montée de manière à être pilotée en incidence autour d'un axe de pivotement (64b), et **en ce que** cet axe de pivotement se situe dans ladite direction opposée par rapport à un palier de roulement (50) interposé entre ladite extension de carter (46) et ledit moyeu de la seconde hélice.

4. Système d'hélices contrarotatives selon l'une quelconque des revendications précédentes, **caractérisé en ce que** le moyeu (48b) de ladite seconde hélice supporte en rotation ledit moyeu (48a) de ladite première hélice.

5. Système d'hélices contrarotatives selon l'une quelconque des revendications précédentes, **caractérisé en ce que** lesdits bras de raccord (60a) de la première hélice (7) s'étendent dans ladite direction donnée en allant radialement vers l'extérieur.

6. Système d'hélices contrarotatives selon l'une quelconque des revendications précédentes, **caractérisé en ce que** lesdits bras de raccord (60a) de la première hélice portent une première virole intermédiaire (62a) participant à la délimitation radiale vers l'intérieur de la veine annulaire principale (58), et **en ce que** lesdits bras de raccord (60b) de la seconde hélice portent une seconde virole intermédiaire (62b) participant à la délimitation radiale vers l'intérieur de la veine annulaire principale, la première virole intermédiaire (62a) se situant dans la continuité de ladite seconde virole (62b) dans ladite direction donnée.

7. Système d'hélices contrarotatives selon la revendication 6, **caractérisé en ce que** les bras de raccord (60a) de la première hélice et ses viroles extérieure (56a) et intermédiaire (62a) associées forment une pièce réalisée d'un seul tenant, et **en ce que** les bras de raccord (60b) de la seconde hélice et ses viroles extérieure (56b) et intermédiaire (62b) associées forment également une pièce réalisée d'un seul tenant.

8. Système d'hélices contrarotatives selon l'une quelconque des revendications précédentes, **caractérisé en ce que** ladite direction donnée est la direction aval.

9. Système d'hélices contrarotatives selon l'une quelconque des revendications précédentes, **caractérisé en ce que** ledit dispositif de transmission mécanique (13) comprend un train épicycloïdal (15) muni d'un planétaire (17) centré sur ledit axe longitudinal (2) et entraîné par le rotor (32) de la turbine libre de puissance, au moins un satellite (21) engrenant avec ledit planétaire (17), un porte-satellite(s) (25) entraînant ladite première hélice (7), ainsi qu'une couronne (31) engrenant avec chaque satellite (21) et entraînant ladite seconde hélice (9).

10. Système d'hélices contrarotatives selon l'une quelconque des revendications précédentes, **caractérisé en ce que** ledit dispositif de transmission mécanique (13) est logé dans un moyeu du carter (42).

11. Système d'hélices contrarotatives selon l'une quelconque des revendications précédentes, **caractérisé en ce que** ledit porte-satellite(s) (25) est solidaire du moyeu (48a) de ladite première hélice (7), et **en ce que** ladite couronne (31) est solidaire du moyeu (48b) de ladite seconde hélice (9).

12. Système d'hélices contrarotatives selon l'une quelconque des revendications précédentes, **caractérisé en ce que** chaque virole extérieure (56a, 56b) porte un anneau (68a, 68b) de rétention des pales de l'hélice concernée.

13. Turbomachine pour aéronef comprenant un système d'hélices contrarotatives (30) selon l'une quelconque des revendications précédentes.

14. Turbomachine selon la revendication 13, **caractérisée en ce qu'**elle est un « open rotor ».

## Patentansprüche

1. System gegenläufiger Propeller (30) für Flugzeug-Turbomaschinen, welches umfasst:
- eine Freilauf-Antriebsturbine (32);
- einen ersten Propeller (7) und einen zweiten Propeller (9), die gegenläufig sind und dazu bestimmt sind, um einen Längsachse (2) des Propellersystems in Drehbewegung gesetzt zu werden, wobei sich der genannte erste Propeller in einer gegebenen Richtung, bezogen auf den genannten zweiten Propeller, befindet, wobei jeder der ersten und zweiten Propeller (7, 9) eine Nabe (48a, 48b) aufweist, die auf der Längsachse (2) zentriert ist, einen Außenring (56a, 56b) aufweist, der konzentrisch dazu angeordnet ist und zur radialen Begrenzung einer ringförmigen Haupt-Strömungsbahn (58) nach außen beiträgt, sowie Verbindungsarme (60a, 60b) aufweist, die den genannten Außenring mit der genannten Nabe verbinden;
- eine Vorrichtung zur mechanischen Kraftübertragung (13), die von der genannten Freilauf-Antriebsturbine angetrieben wird und den ersten und den zweiten Propeller (7, 9) antreibt; und
- ein Gehäuse (42), das zwischen der genannten Freilauf-Antriebsturbine und den genannten ersten und zweiten Propellern (7, 9) angeordnet ist, wobei diese letzteren in der genannten gegebenen Richtung, bezogen auf das Gehäuse, angebracht sind und die Freilauf-Antriebsturbine in der entgegengesetzten Richtung, bezogen auf dieses Gehäuse, angebracht ist, wobei letzteres eine Gehäuse-Erweiterung (46) in der genannten gegebenen Richtung aufweist, die die genannte Nabe (48b) des zweiten Propellers (9) drehbar stützt,
**dadurch gekennzeichnet,**
**dass** die genannten Verbindungsarme (60b) des zweiten Propellers sich in der genannten entgegengesetzten Richtung erstrecken, indem sie radial nach außen verlaufen.

2. System gegenläufiger Propeller nach Anspruch 1,
**dadurch gekennzeichnet,**
**dass** es dergestalt ausgeführt ist, dass sich mindestens ein Teil jedes zu dem zweiten Propeller (9) gehörigen Verbindungsarms (60b) in der genannten entgegengesetzten Richtung befindet, bezogen auf ein Wälzlager (50), das zwischen der genannten Gehäuse-Erweiterung (46) und der genannten Nabe (48b) des zweiten Propellers angeordnet ist.

3. System gegenläufiger Propeller nach Anspruch 1 oder Anspruch 2,
**dadurch gekennzeichnet,**
**dass** der genannte zweite Propeller eine Mehrzahl von Propellerblättern (9a) aufweist, die jedes so angebracht sind, dass sie in Anstellung um eine Schwenkachse (64b) herum gesteuert werden, und dass diese Schwenkachse sich in der genannten entgegengesetzten Richtung befindet, bezogen auf ein Wälzlager (50), das zwischen der genannten Gehäuse-Erweiterung (46) und der genannten Nabe des zweiten Propellers angeordnet ist.

4. System gegenläufiger Propeller nach einem der vorherigen Ansprüche,
**dadurch gekennzeichnet,**
**dass** die Nabe (48b) des genannten zweiten Propellers die genannte Nabe (48a) des genannten ersten Propellers drehbar stützt.

5. System gegenläufiger Propeller nach einem der vorherigen Ansprüche,
**dadurch gekennzeichnet,**
**dass** die genannten Verbindungsarme (60a) des ersten Propellers (7) sich in der genannten gegebenen Richtung erstrecken, indem sie radial nach außen verlaufen.

6. System gegenläufiger Propeller nach einem der vorherigen Ansprüche,
**dadurch gekennzeichnet,**
**dass** die genannten Verbindungsarme (60a) des ersten Propellers einen ersten Zwischenring (62a) tragen, der zur radialen Begrenzung der ringförmigen Haupt-Strömungsbahn (58) nach innen beiträgt, und dass die genannten Verbindungsarme ( 60b) des zweiten Propellers einen zweiten Zwischenring (62b) tragen, der zur radialen Begrenzung der ringförmigen Haupt-Strömungsbahn nach innen beiträgt, wobei der erste Zwischenring (62a) sich in der genannten gegebenen Richtung in Kontinuität mit dem genannten zweiten Zwischenring (62b) befindet.

7. System gegenläufiger Propeller nach Anspruch 6,
**dadurch gekennzeichnet,**
**dass** die Verbindungsarme (60a) des ersten Propellers und sein ihm zugeordneter Außenring (56a) und Zwischenring (62a) ein in einem Stück gefertigtes Teil bilden, und dass die Verbindungsarme (60b) des zweiten Propellers und sein ihm zugeordneter Außenring (56b) und Zwischenring (62b) ebenfalls ein in einem Stück gefertigtes Teil bilden.

8. System gegenläufiger Propeller nach einem der vorherigen Ansprüche,
**dadurch gekennzeichnet,**
**dass** die genannte gegebene Richtung die in Strömungsrichtung abwärts gerichtete Richtung ist.

9. System gegenläufiger Propeller nach einem der vorherigen Ansprüche,
**dadurch gekennzeichnet,**
**dass** die genannte Vorrichtung zur mechanischen Kraftübertragung (13) einen Planetengetriebezug (15) umfasst, der mit einem Zentralrad (17) versehen ist, das auf der genannten Längsachse (2) zentriert ist und durch den Rotor (32) der Freilauf-Antriebsturbine angetrieben wird, wobei mindestens ein Planetenrad (21) mit diesem Zentralrad (17) in Eingriff ist, wobei ein Planetenrad-Träger (25) den genannten ersten Propeller (7) antreibt, und wobei ein Zahnkranz (31) mit jedem Planetenrad (21) in Eingriff ist und den genannten zweiten Propeller (9) antreibt.

10. System gegenläufiger Propeller nach einem der vorherigen Ansprüche,
**dadurch gekennzeichnet,**
**dass** die genannte Vorrichtung zur mechanischen Kraftübertragung (13) in einer Nabe des Gehäuses (42) aufgenommen ist.

11. System gegenläufiger Propeller nach einem der vorherigen Ansprüche,
**dadurch gekennzeichnet,**
**dass** der genannte Planetenrad-Träger (25) mit der Nabe (48a) des genannten ersten Propellers (7) fest verbunden ist, und dass der genannte Zahnkranz (31) mit der Nabe (48b) des genannten zweiten Propellers (9) fest verbunden ist.

12. System gegenläufiger Propeller nach einem der vorherigen Ansprüche,
**dadurch gekennzeichnet,**
**dass** jeder Außenring (56a, 56b) einen Ring (68a, 68b) zum Rückhalten der Propellerblätter des betreffenden Propellers trägt.

13. Flugzeug-Turbomaschine, die ein System gegenläufiger Propeller (30) nach einem der vorherigen Ansprüche aufweist.

14. Turbomaschine nach Anspruch 13,
**dadurch gekennzeichnet,**
**dass** sie eine "open rotor"-Maschine ist.

## Claims

1. A system of contra-rotating propellers (30) for an aircraft jet engine, comprising:
- a free power turbine (32);
- a first propeller (7) and a second propeller (9), contra-rotating intended to be rotated around a longitudinal axis (2) of the system of propellers, said first propeller being placed in a predetermined direction relative to the latter, each one of the first and second propellers (7, 9) comprising a hub (48a, 48b) centered on the longitudinal axis (2), an outer ferrule (56a, 56b) being arranged concentrically thereto and participating in the outward radial definition of the main annular tunnel (58), as well as coupling arms (60a, 60b) linking the outer ferrule to said hub;
- a mechanical transmission device (13) driven by said power free turbine and driving said first and second propellers (7, 9); and
- a casing (42) inserted between the power free turbine and the first and second propellers (7, 9), the latter being arranged in the predetermined direction relative to the casing and the free turbine being arranged in the opposite direction relative to said same casing, the latter having a casing extension (46) in the given direction, rotatably supporting the hub (48b) of the propeller (9),
**characterized in that** said coupling arms (60b) of the second propeller extend in said opposite direction, radially towards the outside.

2. The system of contra-rotating propellers according to claim 1, **characterized in that** it is arranged so that at least one portion of each coupling arm (60b) belonging to the second propeller (9) is located in said opposite direction relative to a rolling bearing (50) inserted between said casing extension (46) and said hub of the second propeller.

3. The system of contra-rotating propellers according to claim 1 or claim 2, **characterized in that** second propeller to comprise a plurality of blades (9a) each mounted so as to be steered in incidence around a pivot axis (64b), and **in that** said pivot axis to be situated in said opposite direction relative to a rolling bearing (50) inserted between said casing extension (46) and said hub of the second propeller.

4. The system of contra-rotating propellers according to any one of the preceding claims, **characterized in that** the hub (48b) of said second propeller rotatably supports said hub (48a) of said first propeller.

5. The system of contra-rotating propellers according to any one of the preceding claims, **characterized in that** said coupling arms (60a) of the first propeller (7) extend in said predetermined direction going radially outwardly.

6. The system of contra-rotating propellers according to any one of the preceding claims, **characterized in that** said coupling arms (60a) of the first propeller support a first intermediate ferrule (62a) participating in the radial inward definition of the primary annular tunnel (58), and **in that** said coupling arms (60b) of the second propeller support a second intermediate ferrule (62b) participating in the radial inward definition of the main annular tunnel, the first intermediate ferrule (62a) being situated in the continuity of said second ferrule (62b) in said given direction.

7. The system of contra-rotating propellers according to claim 6, **characterized in that** the coupling arm (60a) of the first propeller and its associated outer (56a) and intermediate (62a) ferrules form a part made in a single piece, and the coupling arms (60b) of the second propeller and its associated outer (56b) and intermediate (62b) ferrules also form a part made in a single piece.

8. The system of contra-rotating propellers according to any one of the preceding claims, **characterized in that** the predetermined direction is the downstream direction.

9. The system of contra-rotating propellers according to any one of the preceding claims, **characterized in that** said mechanical transmission device (13) comprises an epicyclic gearing (15) provided with a sun gear (17) centered on said longitudinal axis (2) and driven by the rotor (32) of the power free turbine, at least one satellite (21) meshing with said sun gear (17), a planet carrier (25) driving said first propeller (7), as well as a crown (31) meshing with each satellite (21) and driving said second propeller (9).

10. The system of contra-rotating propellers according to any one of the preceding claims, **characterized in that** said mechanical transmission device (13) is housed in a hub of the casing (42).

11. The system of contra-rotating propellers according to any one of the preceding claims, **characterized in that** said planet carrier (25) is secured to the (48a) hub of said second propeller (7), and **in that** said crown (31) is secured to the hub (48b) of said second propeller (9).

12. The system of contra-rotating propellers according to any one of the preceding claims, **characterized in that** each outer ferrule (56a, 56b) supports a retaining ring (68a, 68b) of the blades of the concerned propeller.

13. An aircraft turbomachine comprising a contra-rotating propeller system (30) according to any one of the preceding claims.

14. The turbomachine according to claim 13, **characterized in that** it is an "open rotor".
